# EUROPEAN PATENT APPLICATION

(11) **EP 2 482 425 A1**
(43) Date of publication of application: **01.08.2012**
(21) Application number: 11152944.2
(22) Date of filing: 01.02.2011
(51) Int. Cl.: H02J 9/06

(54) **Blackout ride-through system**

(71) Applicant: Siemens Aktiengesellschaft, 80333 München (DE)
(72) Inventor: Settemsdal, Stig Olav, 7043, Trondheim (NO)

(57) **Abstract**

A blackout ride-through system adapted to bridge a gap in the supply of electrical energy to an electric drive of a marine vessel caused by a blackout of a main power supply is provided. The main power supply comprises a generator and is adapted to provide electrical energy for operating the electric drive of the marine vessel. The blackout ride-through system comprises a battery coupled to the main power supply and to the electric drive of the marine vessel and configured to store electrical energy for operating the electric drive in case of a blackout of the main power supply.

## Description

### Field of the invention

The invention relates to a blackout ride-through system for bridging a gap in the supply of electrical energy to an electric drive of a marine vessel.

### Background of the invention

Some types of marine vessels use electric propulsion systems in which propellers are driven by electrical motors. Examples include azimuth thrusters of a marine vessel in which an electric motor is arranged in a pod and directly connected to the propeller. Electricity is produced on board and transmitted to the electric motor for driving the thruster. Other types of electric drives that require electrical energy for operation include anchor winch drives, drives of drilling applications and the like.

Marine vessels employing such types of electric drives generally comprise an onboard power plant which produces the required electrical energy for example by means of a diesel engine or a gas turbine coupled to a generator. Such arrangements provide the main power supply for the vessel. If the power plant experiences a blackout, or if there is fault in the power transmission and distribution system, the vessel will loose its main power supply.

The power plants of such vessels are generally designed to restore electric power as fast as possible, so that operation of the electric drives can continue with minimal delay. This is of particular importance for marine vessels having electric propulsion systems, as inoperability of the thruster drives may lead to a loss of position and maneuverability. Vessels operating dynamic positioning systems of higher classifications, such as DYNPOS-AUTR (DP2) or DYNPOS-AUTRO (DP3), are thus required to have a certain redundancy in the power generation systems. The power generation system may for example be split into several separate and independent subsystems. For DYNPOS-AUTRO classification or DPS3-classification, the main bus bar is for example split into two or more different sections, each being connected to a generator. Bus bar breakers provided between the sections of the main Bus bar should be open during class 3 operation so that one section is not affected by a blackout in another section.

The integration of such systems is complex and expensive. It is furthermore undesirable to operate two completely separate power generation systems on the same vessel, as this prevents for example load sharing between generators.

Even if the power on the vessel is restored as fast as possible, there is still a considerable amount of time in which the vessel's drives are inoperable, resulting in a loss of maneuverability for a vessel having an electric propulsion system.

In heavy weather or in strong currents, the thrusters of the vessel being inoperable for a time span as short as one minute can result in a substantial change in position of the vessel, which can in turn lead to dangerous situations, in particular if the vessel is a drilling rig, a drill ship or the like.

### Summary

Accordingly, there is a need to improve the protection of the power supply system of a marine vessel against blackout, while keeping the complexity and expense of such black out protection low.

This need is met by the features of the independent claims. The dependent claims describe preferred embodiments of the invention.

According to an aspect of the invention, a blackout ride-through system adapted to bridge a gap in the supply of electrical energy to an electric drive of a marine vessel caused by a blackout of a main power supply is provided. The main power supply comprises a generator and is adapted to provide electrical energy for operating the electric drive of the marine vessel. The blackout ride-through system comprises a battery coupled to the main power supply and to the electric drive of the marine vessel. The battery is configured to store electrical energy provided by the main power supply and, in case of a blackout of the main power supply, to provide stored electrical energy to the electric drive so as to enable a continuation of the operation of the electric drive.

As the energy stored in the battery bridges the gap in the power supply to the electric drive, operation of the electric drive can continue, which may enable the marine vessel to maintain position and maneuverability. Furthermore, it is not necessary to provide complex redundant systems for ensuring a continued operation of the electric drive. Even for a vessel with a dynamic positioning system of a higher classification, it my thus become possible to operate the power supply system with a closed ring on the main power plant. Even with such configuration, i.e. without separate sections of the main bus bar, the vessel comprising the system of the present invention may obtain a DYNPOS-AUTR or DP3-classification.

By providing electrical energy from the battery, the vessel does not lose the capability to operate essential electrical motor drives, such as thruster drives, winch drives and drilling drives during a short blackout. The drives can continue to operate for a period of time (determined by the capacity of the battery) after the blackout.

In an embodiment, the battery is adapted so as to enable a continued operation of the electric drive for a predetermined minimum amount of time. Preferably, the battery is capable of maintaining the operation of the electric drive for at least 30 seconds, more preferably for at least 45 seconds, or even for at least 60 seconds. Depending on the configuration, e.g. the size of the electric drive and of the battery, the system may be configured to continue operation of the drive after blackout for more than 5 or even more than 10 minutes. Such time spans are generally enough to bring the main power supply back on line, or to start an auxiliary power supply so that the operation of the electric drive is not interrupted. The predetermined minimum amount of time for which continued operation is ensured can be set in accordance with the particular application, in particular with the time generally required to restore the main power supply.

The electric drive of the marine vessel may be at least one of a thruster drive, a drilling drive and an anchor winch drive. These drives are generally required for a safe operation of the vessel and thus benefit from the blackout protection provided by the blackout ride-through system. Note that the system may comprise a battery for each of these electric drives, thereby providing a reliable blackout ride-through for each drive.

In an embodiment, the electrical energy is supplied by the main power supply to the electric drive via a direct current (DC) circuit, the battery being coupled to the direct current circuit and being configured to provide stored electrical energy to the electric drive via the direct current circuit. As an example, the DC circuit may comprise a DC bus towards which one or more electric drives are coupled. One or more batteries may be coupled to the DC circuit. The DC circuit may be part of a variable frequency drive used to control the operation of an alternating current (AC) electrical motor comprised in the electric drive of the marine vessel. As the main power supply generally provides the electrical energy in form of an alternating current, it is beneficial to couple the battery to the direct current circuit, e.g. DC bus, of the variable frequency drive (VFD) as no further rectifiers or inverters need to be provided for charging the battery or supplying power from the battery to the electric drive.

The direct current circuit may for example be coupled to the power supply via a rectifier adapted to convert alternating current (AC) supplied by the power supply to direct current (DC) and may be coupled to the electric drive via an inverter adapted to convert DC supplied by the direct current circuit to AC for driving the electric drive. It is certainly also conceivable to provide two or more rectifiers for providing DC to the direct current circuit, or to couple plural inverters to the direct current circuit for providing one or more electric drives with electrical energy. The electric drive may for example comprise a three phase AC driven electrical motor.

The direct current circuit may be adapted operate at an operating voltage between 500 and 1200 Volt, preferably in a range between 800 and 1000 Volt. The direct current circuit may for example be a DC bus supplying 930 Volt.

It should be clear that in other embodiments, the battery may also be coupled to another bus, for example an AC bus fed from the main power supply. The coupling may then include the necessary rectifier/inverter for charging or discharging the battery. The AC bus may for example provide between 500V and 1000V, e.g. 690V three-phase AC.

In some embodiments, the battery may be coupled to the direct current circuit via a fuse. In other embodiment, the battery can be coupled to the direct current circuit via a voltage converter, such as a bidirectional step up or step down chopper. Examples of such converters are a buck-converter or a boost-converter. Accordingly, the voltage supplied to and obtained from the battery can be converted so that charging of the battery becomes more efficient and that the DC circuit is supplied with the correct voltage in case of a blackout.

In an embodiment, the battery comprises a lithium polymer battery, e.g. in form of several battery modules. This has the advantage that the battery is compact and can be sealed completely. Such type of battery has a lower weight and requires less volume than other types of batteries or large scale capacitors. The battery may for example be of the type having a nickel manganese cobalt (NMC) oxide cathode.

The battery may have a capacity of at least 50 kWh (kilowatt hours), preferably of at least 100 kWh, more preferably of at least 250 kWh. The capacity of the battery may be dimensioned in accordance with the type of electric drive and the time span that it is supposed to bridge. The capacity of the battery may for example lie in the range of about 50 kWh to about 3MWh. If the electric drive is for example a drilling drive, an electrical energy of 1-3 MWh (megawatt hours) may need to be provided for blackout ride-through. As an example, two batteries each having a capacity of 1.5 MWh may be provided for such case.

The battery may be a bank or a stack of smaller battery modules, e.g. of modules each having capacity of 5 to 10 kWh. The capacity of the battery can then be adapted by providing the required number of battery modules.

The battery may have an energy density of at least 130 Wh/kg (watt hours per kilogram), preferably of at least 150 Wh/kg. This has the advantage that the footprint and the weight of the battery can be kept small.

Preferably, the battery is a fully sealed battery.

In an embodiment, the battery is provided with a battery management system adapted to monitor the state of the battery and with an interface towards a control bus for enabling a communication with the battery management system. The control bus may for example be a controller area network (CAN) based bus. The state of the battery may thus be monitored from a switchboard or remote location, such as the vessel's bridge. The battery management system may furthermore balance the cells of the battery. It may perform cell balancing of cells in a battery module or balance the battery modules among themselves. Accordingly, it becomes possible to connect multiple battery modules in parallel or in series. The battery management system may furthermore supervise and control the charging of the battery.

The electric drive may have an input power of at least 200 kW, preferably of at least 500 kW. The input power may for example lie in the range of about 200 kW to about 20 MW. For example for thruster drives, the electric drive may have an input power in the range of 500 kW - 6 MW. For drilling drives, the input power may be in a range of 1 MW - 20 MW. Note that a drive may comprise more than one electrical motor. For the whole range of such drives, the battery may ensure a continued operation until the main power supply is restored.

In a particular embodiment, the electric drive may comprise thruster drives of the marine vessel, wherein the marine vessel is equipped with a dynamic positioning (DP) system, the battery providing electrical energy to the thruster drives in case of failure of the power supply so as to ensure a continued operation of the dynamic positioning system. The positioning can thus be maintained even if the power plant or the transmission or distribution of the electrical energy of the vessel fails. The thrusters obtain electrical energy from the battery until the main power supply is restored.

The invention further relates to the use of a battery for bridging a gap in the supply of electrical energy to an electric drive of a marine vessel caused by a blackout of a main power supply. The main power supply comprises a generator and is adapted to provide electrical energy for operating the electric drive of the marine vessel. The battery is coupled to the main power supply and to the electric drive of the marine vessel and is configured to store electrical energy provided by the main power supply and, in case of a blackout of the main power supply, to provide stored electrical energy to the electric drive so as to enable a continuation of the operation of the electric drive.

By using the battery in such a way, advantages similar to the ones outlined above may be achieved. The battery and the components the battery is used with may be configured as outlined above. The use of the battery may for example comprise the coupling of the battery to a DC circuit provided between the main power supply and the electric drive via which electrical energy is supplied to the electric drive.

The features of the embodiments mentioned above and those to be explained below can be combined with each other unless noted to the contrary.

### Brief description of the drawings

The foregoing and other features and advantages of the invention will become further apparent from the following detailed description read in conjunction with the accompanying drawings. In the drawings, like reference numerous refer to like elements.
Figure 1 is a schematic drawing of a blackout ride-through system according to an embodiment of the invention.
Figure 2 is a schematic drawing of a blackout ride-through system according to an embodiment of the invention which is coupled to a DC bus.
Figure 3 is a schematic drawing illustrating a blackout ride-through system according to an embodiment of the invention which is coupled to a DC bus which supplies electrical energy to plural electric motors.

Figures 4A-4C show schematic drawings of blackout ride-through systems according to further embodiments of the invention which comprise a bidirectional step up or step down converter.

### Detailed description

In the following, embodiments of the present invention will be described in detail with reference to the accompanying drawings. It is to be understood that the following description of the embodiments is given only for the purpose of illustration and is not to be taken in a limiting sense.

It should be noted that the drawings are to be regarded as being schematic representations only, and elements in the drawings are not necessarily to scale with each other. Rather, the representation of the various elements is chosen such that their function and general purpose become apparent to a person skilled in the art. It is also to be understood that the coupling of physical or functional units as shown in the drawings and described hereinafter does not necessarily need to be a direct connection or coupling, but may also be an indirect connection or coupling, i.e. a connection or a coupling with one or more additional intervening elements. The skilled person will further appreciate that the physical or functional units illustrated and described herein with respect to the different embodiments not necessarily need to be implemented as physically separate units. One or more physical or functional blocks or units may be implemented in a common circuit, chip, circuit element or unit, while other physical or functional blocks or units may be implemented in separate circuits, chips, circuit elements or units.

In the following, embodiments of a blackout ride-through system are illustrated and explained in further detail. The system is adapted to bridge a gap in the supply of electrical power to an electric drive of a marine vessel, e.g. to bridge the gap between a blackout of the main power supply and the restoring of the main power supply, so that the electric drive does not experience an interruption of the power supply. The blackout ride-through system may accordingly also be termed an un-interruptible power supply (UPS) system for an electric drive of a marine vessel.

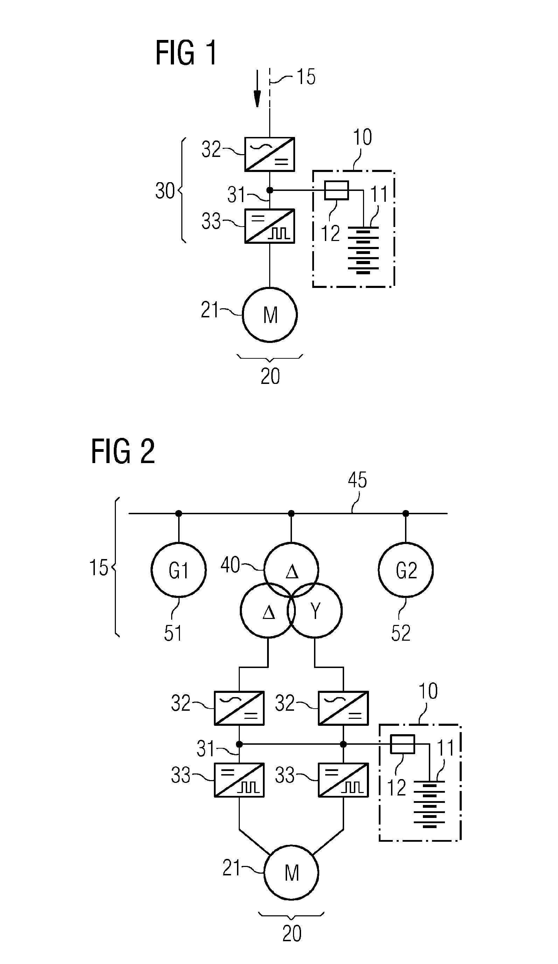

Figure 1 schematically illustrates a blackout ride-through system 10 coupled to a main power supply 15 and an electric drive 20 of a marine vessel. Only the connection to the main power supply 15 is indicated, with the supply itself not being explicitly shown. The arrow indicates the flow of electrical energy from the main power supply towards the electric drive 20.

The electric drive 20 comprises the electrical motor 21 which is generally a three-phase electrical motor. Electrical drive 20 can for example be a thruster drive, a drilling drive or an anchor winch drive of the marine vessel. All these types of applications require a substantial power output from electric drive 20; accordingly, the electric drive may be rated for an input power range of 560kW to 5,5MW, or even up to 20MW for drilling drives systems. The drive 20 can be provided with more than one electric motor 21; it may for example comprise up to 30 motors connected on one common DC bus 31.

Note that although the subsequent description is given with respect to electric drives employing AC electric motors, they are equally applicable to drives employing DC electrical motors, i.e. the blackout ride-through system may be coupled to such drives in order to provide an un-interruptible power supply.

In the embodiment of figure 1, the main power supply 15 is coupled to a rectifier 32 which converts three-phase AC delivered by the power supply 15 into direct current. The direct current circuit 31, which may be implemented as DC bus, is coupled to the inverter 33, which generates three-phase alternating current with variable frequency. Rectifier 32, DC bus 31 and inverter 33 can thus constitute a variable frequency drive 30 which supplies the electrical motor 21 with three-phase AC of a variable frequency.

The blackout ride-through system 10 is coupled to the DC Bus 31 of the variable frequency drive 30. System 10 comprises the battery 11 which is coupled to DC Bus via fuse 12. Fuse 12 prevents damage to battery 11 which may occur due to excess currents being drawn from or supplied to the battery, e.g. due to a shortcut or the like. Battery 11 maybe a battery bank, it may comprise a plurality of battery modules which are connected in series or in parallel. The voltage at which the battery 11 is rated can be adjusted by the number of battery modules connected in series, whereas the total capacity of battery 11 can be determined by the number of battery modules connected in parallel.

The voltage at which battery 11 is rated can for example be adapted to the voltage provided on the DC Bus 31. For the applications mentioned above, the DC Bus may for example operate at voltages between 500 Volts and 1200 Volts. A particular application would for example be a Voltage of 930 Volts, which is obtained by rectifier 32 from 3-phase AC voltage of 690 Volts provided by the main power supply. In the embodiment of figure 1, battery 11 is directly charged from DC Bus 31. Charging 10 occurs during general operation, i.e. at times when the main power supply 15 is operating within specifications. Battery 11 may comprise a battery management system (BMS) which controls the charging of the battery modules of battery 11. During normal operation, battery 11 may be kept close to a fully charged state.

In certain situations, a blackout of the power supply 15 may occur. The blackout may for example be due to a failure in the operation of one or more generators of the power supply, the triggering of a fuse or other protective circuit, such as a main bus bar breaker, or any other fault in the electrical power transmission or distribution systems.

In conventional systems, the electric drive 20 would become inoperable upon such blackout of the main power supply 15. To remedy such undesired situation, the general approach of conventional systems is to bring the main power supply 15 back on line as fast as possible. Depending on the configuration, this may be possible within 1 minute, yet in other situations, the blackout may last as long as 5 or even 10 minutes.

In the configuration of figure 1, the time span between the blackout and the restoring of the main power supply is bridged by the blackout ride-through system 10. Battery 11 supplies electrical energy to the electric drive 20 so as to enable a continued operation of the electric drive 20. Battery 11 delivers a DC current to the DC Bus 31, which is converted by three-phase inverter 33 into the three-phase AC required by electric motor 21. Electric drive 20 can thus continue to operate until the main power supply is restored. In case of a thruster drive, this has the advantage that the marine vessel does not loose maneuverability. The continued supply with electrical energy enables the vessel to maintain its position, so the system has particular advantages in combination with a dynamic positioning system.

In the case of a drilling drive, the continued power supply provided by system 10 has the advantage that the drilling operation does not need to be interrupted, which may be detrimental to the drill string.

The coupling of system 10 to the DC circuit 31 may of course comprise further intervening elements, which may for example control the current flow in a particular direction during charging of the battery or during the operation of electric drive 20 from the battery 11 in case of a blackout. It should be clear that figure 1 is only a simple schematic drawing of an embodiment of system 10 in a particular application. Other applications may for example include the operation of a DC electric motor, in which case no inverter 33 would need to be provided. Instead, a voltage converter may be employed for regulating the operating speed of the electric motor. In other applications, the system 10 may be coupled to an AC bus, for example via a rectifier/inverter for charging or discharging the battery 11, respectively.

The capacity of battery 11 is configured in accordance with the particular requirements, in particular with the input power of the electric motor 21 and the time span during which operation of the electric motor 21 needs to be maintained. Battery capacity can be increased by connecting further battery modules in parallel in the battery bank. The capacity of battery 11 may for example be at least 50 kWh, preferably at least 100 kWh. For applications with higher power demands, such as drilling drives, the battery 11 may have a capacity of even up to 1-3 MWh. As an example, battery 11 may comprise two battery banks each having a capacity of 1.5 MWh. Higher capacities can be achieved by providing further battery banks or by increasing the capacity of each bank.

Battery 11 is preferably a lithium polymer battery. There are different types of lithium polymer batteries, and one type that may be used is the NMC type which comprises a nickel manganese cobalt (NMC) oxide cathode. The use of other types of lithium polymer batteries or different batteries at all is certainly also conceivable. The battery may be configured to have an energy density of at least 130 Wh/kg (Watthours per kilogram), or even at least 150 Wh/kg. By providing a battery with such energy densities, the weight of the battery for a particular capacity can be reduced significantly. The volume energy density is preferably at least 300 Wh/l (Watthours per liter). By using a battery with such high volume energy density, the battery can be very compact even if providing a high capacity. A battery with a capacity of 1 MWh may thus require only a volume of approx 3 m³. The small volume and the small weight of the battery even at higher capacities enable the use of the battery on a marine vessel, on which space and the capacity for taking up additional weight are strictly limited.

The battery is fully sealed. As such, the battery is maintenance free. As it is fully sealed, the battery does not require special battery rooms or special considerations related to ventilation. Furthermore, such batteries can have a life-cycle of up to 25 to 30 years. As lithium polymer batteries have a solid polymer as an electrolyte, they are furthermore less dangerous than conventional lead-acid batteries, and thus particularly advantageous under the aspect of onboard safety of the marine vessel.

Battery 11 is preferably provided with a battery management system (not shown). Battery modules of battery 11 may for example each comprise a number of battery cells and BMS circuitry which for example controls cell balancing. Each module may furthermore comprise an interface to a data bus, e.g. a CAN-based data bus, which allows communication with the BMS of each module. Battery 11 may comprise the interconnected battery modules forming the battery bank, as well as a master controller connected via the data bus to each of the battery management systems of the individual modules. The master controller may then control the overall operation of the battery bank. It may for example ensure a uniform charging and a discharging of the individual battery modules, or may connect and disconnect the overall battery bank from the load. This may for example be necessary in order to stay below the rated maximum discharge rate. By interfacing the master controller of the battery management system, it is further possible to obtain information about the overall state of the battery 11 and to control the charging or discharging of the battery from an external control center.

Further possible implementations of the blackout ride-through system of the present invention and configurations of the environment in which the system may be used are described hereinafter. It should be clear that the description and the explanations given above with respect to figure 1 are similarly applicable to the embodiments illustrated in and described with respect to the remaining figures 2 to 4. The embodiments illustrated in figures 2 to 4 are modifications of the more general embodiment illustrated in figure 1. The skilled person will appreciate that the features described with respect to the different embodiments can be combined.

In figure 2, two rectifiers 32 are coupled to the main power supply 15. The DC circuit 31 is again provided in form of a DC bus which connects to the output of the two rectifiers.

The main power supply 15 comprises two generators 51 and 52 which are coupled to an AC bus 54. The AC bus can be provided by a main bus bar, which may be located in the main switchboard of the marine vessel. Main Bus bar 54 may be sectioned, with one or more generators being connected to each section. These sections can be interconnected by means of bus bar breakers, which can be operated both in opened and closed conditions, thereby providing the possibility of redundant separate power supply systems and of separating the systems upon failure.

In the example of figure 2, a three-phase AC transformer with three windings 40 is coupled to the main Bus bar 45. The two secondary windings have different connections; one has a delta-connection (Δ), the other a star-connection (Y). The output AC voltages provided by the two secondary windings of the transformer 40 can thus be phase shifted with respect to each other. A smoother DC voltage having fewer harmonic distortions is thus obtained on the DC bus after rectification (rectifiers 32).

Battery 11 is again coupled to the DC Bus 31 via fuse 12. One or more electric drives 20 can connect to DC Bus 31. In the present example, the electric motor 21 of electric drive 20 is coupled via two inverters 33 to DC Bus 31. This way, a high electric power rated electric motor 21 can be supplied with electrical energy by inverters having a lower power rating. Two 1.1 MW inverters may for example feed a 2.2 MW electric drive 20. It is clear that the capacity of battery 11 is dimensioned accordingly so that it is capable of providing electrical energy to drive 20 for operating drive 20 for the required time period, e.g. for at least 5 or even at least 10 minutes.

Figure 2 shows only one possible configuration of a main power supply for the electric drive 20. It should be clear that other configurations are also conceivable, e.g. a direct coupling of a generator to a variable frequency drive connected to the electric motor or the like. Coupling the blackout ride-through system 10 to the DC Bus 31 has the particular advantage that both inverters 33 can be supplied with electrical energy from battery 11.

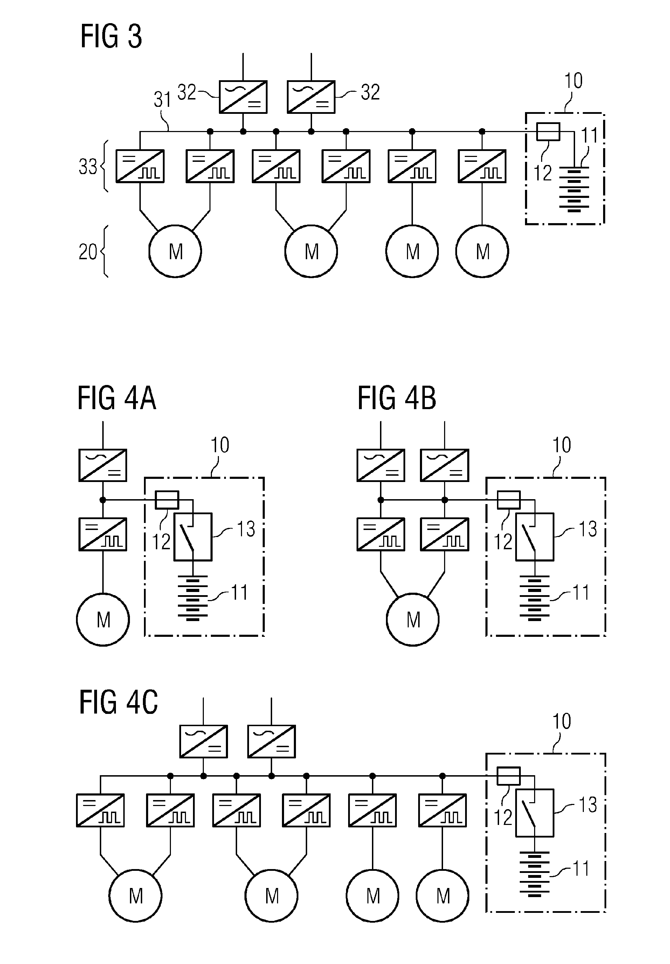

Figure 3 illustrates the possibility of connecting further electric drives 20 to the DC Bus 31. Depending on their power rating, some electric drives 20 may be connected via one or two inverters 33, while other drives may be connected by 3, 4 or even more inverters. Note that more than one of the electric motors (M) illustrated in Fig. 3 can be part of the same drive, i.e. 2, 3, 4 or even more motors may belong to the same electric drive. A drilling drive can for example comprise a certain number of electric motors coupled to the same shaft. The electric drive 20 may for example comprise up to 30 motors.

In such configurations in which multiple electric drives or multiple electric motors of the same drive connect to the DC Bus 31, the battery 11 can be sized so as to be capable of operating each of the drives 20 simultaneously for a predetermined amount of time required to bridge a gap in the supply with electrical energy from the main power supply.

Figures 4A to 4C illustrate configurations similar to those of figures 1 to 3. The blackout ride-through system 10 of these examples comprises additionally a bidirectional converter which converts the voltages supplied by the DC Bus 31 and by the battery 11. If the voltage rating of battery 11 is higher than the voltage provided on the DC Bus 31, converter 13 can be adapted to step up the voltage of the DC Bus to a voltage required for charging the battery 11, and to step down the voltage provided by battery 11 to the voltage required on DC Bus 31. The same applies vice versa if the DC Bus 31 is operated at a voltage higher than that at which battery 11 operates. Converter 13 further provides the possibility of better controlling the voltages for charging and discharging battery 11. Charging generally occurs at a voltage higher than that provided by the battery during discharging. Accordingly, converter 13 can adapt the voltages so that charging and discharging become more effective.

Converter 13 may for example be implemented as a bidirectional step up/ step down chopper. Such converters are also known as boost-converter and buck-converter, and may employ circuit elements such as thyristors, power MOSFETs, insulated gate bipolar transistors (IGBTs) or the like.

By providing the bidirectional converter 13, the blackout ride-through system 10 can more easily be adapted for different applications with different DC bus voltages, and charging and discharging of battery 11 can be made more efficient. As illustrated in figures 4A to 4C, the bidirectional converter 13 can be employed in any of the configurations shown in figures 1 to 3.

Summarizing, a blackout ride-through system is provided which allows the continued operation of electric drives of a marine vessel during a blackout of the main power supply. This increases the operational safety of the vessel, as a sudden cease of operation of the vessels propulsion system or the drilling drive can lead to dangerous situations. Each essential electric motor drive on the vessel may thus be provided with such a blackout ride-through system. Essential drives are for example thruster drives, drilling drives and anchor winch drives.

Furthermore, dynamic positioning systems installed on the vessel benefit from the blackout ride-through system. If coupled to the thruster drives, the propulsion system of the vessel will still be operable after a blackout of the main power supply. While conventional vessels are required to operate two separate main power supplies during class 3 (DP3) operation, the system of the present invention may allow the vessel to operate with a closed ring on the main power plant. This means that the power supply system of the vessel can operate with closed bus bar breakers on the main bus bar even during DP3 operation.

## Claims

1. A blackout ride-through system adapted to bridge a gap in the supply of electrical energy to an electric drive (20) of a marine vessel caused by a blackout of a main power supply (15), the main power supply (15) comprising a generator (51, 52) and being adapted to provide electrical energy for operating the electric drive (20) of the marine vessel, the blackout ride-through system (10) comprising:
- a battery (11) coupled to the main power supply (15) and to the electric drive (20) of the marine vessel and configured to store electrical energy provided by the main power supply (15) and, in case of a blackout of the main power supply (15), to provide stored electrical energy to the electric drive (20) so as to enable a continuation of the operation of the electric drive (20).

2. The blackout ride-through system according to claim 1, wherein the battery (11) is adapted so as to enable a continued operation of the electric drive (20) for a predetermined minimum amount of time, preferably for at least 30 seconds, more preferably for at least 60 seconds, even more preferably for at least 5 minutes.

3. The blackout ride-through system according to claim 1 or 2, wherein the electric drive (20) of the marine vessel is at least one of a thruster drive, a drilling drive and an anchor winch drive.

4. The blackout ride-through system according to any of the preceding claims, wherein the electrical energy is supplied by the main power supply (15) to the electric drive (20) via a direct current circuit (31), the battery (11) being coupled to the direct current circuit (31) and being configured to provide stored electrical energy to the electric drive via the direct current circuit (31).

5. The blackout ride-through system according to claim 5, wherein the direct current circuit (31) is part of a variable frequency drive (30) used to control the operation of an alternating current electrical motor (21) comprised in the electric drive (20) of the marine vessel.

6. The blackout ride-through system according to claim 4 or 5, wherein the direct current circuit (31) is coupled to the power supply (15) via a rectifier (31) adapted to convert alternating current supplied by the power supply to direct current and is coupled to the electric drive (20) via an inverter (33) adapted to convert direct current supplied by the direct current circuit (31) to alternating current for driving the electric drive (20).

7. The blackout ride-through system according to any of claims 4-6, wherein the direct current circuit (31) is adapted to be operated at an operating voltage between 500V and 1200V, preferably in a range between 800V and 1000V.

8. The blackout ride-through system according to any of claims 4-7, wherein the battery (11) is coupled to the direct current circuit (31) via a bi-directional voltage converter (13), in particular a bi-directional step up or step down chopper.

9. The blackout ride-through system according to any of the preceding claims, wherein the battery (11) comprises a lithium polymer battery.

10. The blackout ride-through system according to any of the preceding claims, wherein the battery (11) has a capacity of at least 50 kWh, preferably of at least 100 kWh.

11. The blackout ride-through system according to any of the preceding claims, wherein the battery (11) has an energy density of at least 130 Wh/kg, preferably at least 150 Wh/kg.

12. The blackout ride-through system according to any of the preceding claims, wherein the battery (11) is provided with a battery management system adapted to monitor the state of the battery and with an interface towards a control bus, in particular a controller area network (CAN) based bus, for enabling a communication with the battery management system.

13. The blackout ride-through system according to any of the preceding claims, wherein the electric drive (20) has an input power of at least 200 kW, preferably of at least 500 kW.

14. The blackout ride-through system according to any of the preceding claims, wherein the electric drive (20) comprises thruster drives of the marine vessel, the marine vessel being equipped with a dynamic positioning system, said battery (11) providing electrical energy to the thruster drives in case of a blackout of the main power supply (15) so as to ensure a continued operation of the dynamic positioning system.

15. Use of a battery (11) for bridging a gap in the supply of electrical energy to an electric drive (20) of a marine vessel caused by a blackout of a main power supply (15), the battery (11) being coupled to the main power supply (15) and to the electric drive (20) of the marine vessel and configured to store electrical energy provided by the main power supply (15) and, in case of a blackout of the main power supply (15), to provide stored electrical energy to the electric drive (20) so as to enable a continuation of the operation of the electric drive (20).
